# EUROPÄISCHE PATENTSCHRIFT

(11) **EP 3 412 830 B1**
(45) Veröffentlichungstag und Bekanntmachung des Hinweises auf die Patenterteilung: **29.01.2020**
(21) Anmeldenummer: 17175163.9
(22) Anmeldetag: 09.06.2017
(51) Int. Cl.: E01C 19/48, B60J 5/14, B60J 7/04

(54) **BAUMASCHINE MIT BEDIENSTAND UND ZUGANGSSCHUTZ**
CONSTRUCTION MACHINE WITH OPERATOR STAND AND ACCESS PROTECTION
MACHINE DE CONSTRUCTION DOTÉE D'UN POSTE DE COMMANDE ET DE PROTECTION D'ACCÈS

(43) Veröffentlichungstag der Anmeldung: 12.12.2018
(73) Patentinhaber: Joseph Vögele AG, 67067 Ludwigshafen (DE)
(72) Erfinder: BUSCHMANN, Martin, 67435 Neustadt (DE)
(74) Vertreter: Grünecker Patent- und Rechtsanwälte PartG mbB

(56) Entgegenhaltungen:
- DE-U1- 20 000 993
- FR-A1- 2 779 404
- JP-A- 2011 183 931

## Beschreibung

Die vorliegende Erfindung betrifft eine Baumaschine, bei der es sich insbesondere um einen Straßenfertiger oder ein Beschickerfahrzeug handeln kann, mit einem Bedienstand und einem Dach, welches den Bedienstand überspannt.

Baumaschinen, insbesondere Straßenbaumaschinen, weisen in der Regel einen Bedienstand auf, auf dem ein Bedienpult zur Steuerung der Baumaschine, mindestens ein Fahrersitz und weitere Steuergeräte angeordnet sind, und auf dem sich während des Betriebs ein oder mehrere Operateure bzw. Fahrer aufhalten. Zur besseren Übersicht und Koordination mit anderen Bauarbeitern ist der Bedienstand oftmals offen, also nicht kabinenartig, ausgebildet, weist jedoch zum Wetterschutz ein Dach auf, welches den Bedienstand überspannt. Das Dach ist dabei auf einer Ständerstruktur angebracht, welche aus Rohren, Stangen oder ähnlichen Bauteilen aufgebaut und verstrebt ist. Da der Bedienstand sich zumeist in erhöhter Position auf der Baumaschine befindet, sind an den Seiten des Bedienstands üblicherweise Geländer oder Gitter als Absturzsicherung angebracht. Diese begrenzen zugleich den Zugang zum Bedienstand, welcher meist nur über einen begrenzten Bereich an einer Seite der Baumaschine, zumeist hinten, durch eine Aussparung im Geländer ermöglicht wird. Die das Dach tragende Ständerstruktur ist oftmals höhenverstellbar, so dass das Dach von einer oberen Betriebsposition auf eine auf den Bedienstand abgesenkte Transportposition und umgekehrt verstellbar ist. Dadurch kann die Baumaschine auf einem Tieflader transportiert werden, wobei Höhenbeschränkungen, zum Beispiel beim Unterfahren von Brücken, eingehalten werden können. Während des Nichtbetriebs und Verbleibs der Baumaschine auf der Baustelle, zum Beispiel über Nacht, ist es zudem sinnvoll, zumindest das Bedienpult der Baumaschine gegen unbefugten Zugriff und Vandalismus zu schützen. Dies erfolgt zumeist durch Anbringen von verschließbaren Abdeckungen direkt auf dem Bedienpult.

Aus der DE 200 00 993 U1 ist eine Straßenbaumaschine mit einem Führerstand und einem den Führerstand überdeckenden Dachaufbau bekannt, wobei der Dachaufbau eine um eine obenliegende Schwenklagerung verstellbare Frontscheibe umfasst, welche aus einer Schließstellung nach innen in den Führerstand und bis unter das Dach in eine Belüftungsstellung schwenkbar ist.

Aus der JP 2011-183931 ist eine Baumaschine mit einem Führerstand bekannt, welche eine nach oben schwenkbare Frontscheibe umfasst, wobei die Frontscheibe auch als Zugangsschutz für den Führerstand dient.

Die Aufgabe der Erfindung ist es, einen verbesserten Schutz für das Bedienpult einer Baumaschine bereitzustellen.

Gelöst wird die Aufgabe durch eine Baumaschine mit den Merkmalen des Anspruchs 1. Vorteilhafte Weiterbildungen der Erfindung sind in den Unteransprüchen angegeben.

Eine erfindungsgemäße Baumaschine, welche ein Straßenfertiger oder Beschickerfahrzeug für einen Straßenfertiger sein kann, umfasst einen Bedienstand, welcher von einem Dach überspannt wird, das von einer höhenverstellbaren Ständerstruktur getragen wird. Die Ständerstruktur kann zum Beispiel vier an den Ecken des Bedienstands positionierte Stangen aufweisen, wobei die Stangen einen Teleskopmechanismus oder Scharniere aufweisen, um das Dach von einer oder mehreren oberen Betriebspositionen auf eine oder mehrere untere Transportpositionen und umgekehrt zu verstellen. In einer der oberen Betriebspositionen, befindet sich das Dach auf einer Höhe, welche das Betreten des Bedienstands erlaubt, und in einer der unteren Transportpositionen ist das Dach auf den Bedienstand, also zum Beispiel auf das Bedienpult und den Fahrersitz als Punkte der größten Erhebung, abgesenkt. Zweckmäßig wird zumeist die oberste Betriebsposition bzw. die unterste Transportposition verwendet, es kann jedoch zum Beispiel beim Durchfahren niedriger Unterführungen im Straßenbaubetrieb hilfreich sein, das Dach geringfügig, zum Beispiel um wenige Zentimeter, abzusenken, um eine Kollision zu vermeiden.

An dem Dach und/oder der Ständerstruktur ist ein Zugangsschutz angebracht, welcher als flächiges Element ausgebildet ist. Der Zugangsschutz ist dazu konfiguriert, eine zum Dach benachbarte Verwahrposition und eine vom Dach weiter beabstandete Funktionsposition reversibel einzunehmen. In der Funktionsposition versperrt der Zugangsschutz den Zugang zum Bedienstand, so dass keine Personen mehr auf den Bedienstand gelangen können. Wie oben beschrieben, ist der Zugang eine Aussparung der Begrenzung des Bedienstandes in Form eines Geländers, einer Gitterstruktur oder einer vergleichbaren Einfassung. Ein Geländer kann dabei ein, zwei oder mehrere horizontale Streben umfassen, welche in einem vertikalen Abstand angeordnet sind, der ein Hindurchzwängen einer Person nicht erlaubt. Üblicherweise wird die Verwahrposition des Zugangsschutzes während des Betriebs der Baumaschine eingenommen und die Funktionsposition nach Betriebsende oder während einer Betriebspause. Der Zugangsschutz hat zweckmäßig eine rechteckige Form, ohne auf diese begrenzt zu sein, und kann den Zugang das Geländer überlappend verdecken, den Zugang exakt ausfüllen oder auch kleiner als der Zugang sein, solange seine Größe ausreichend ist, um einen Zutritt einer Person auf den Bedienstand zu verhindern. Der Bedienstand ist damit vor unbefugtem Betreten geschützt, womit auch ein Zugriff auf das Bedienpult und ein Diebstahl der Baumaschine verhindert wird. Desweiteren sind durch diese Anordnung auch alle anderen, auf dem Bedienstand befindlichen Einrichtungen, wie zum Beispiel die Sitze, vor Vandalismus geschützt. Es werden somit keine separaten Abdeckungen für einzelne Komponenten, wie zum Beispiel das Bedienpult, benötigt und es müssen folglich während des Betriebs nicht mehrere Abdeckungen verwahrt werden. Insbesondere bei Bedienständen, welche mehrere Bedienpulte aufweisen, bedeutet dies eine Aufwands- und damit Zeitersparnis. Da der Bedienstand nun komplett verriegelt ist, verbleiben darin Stauräume, z.B. zwischen den Sitzen, welche genutzt werden können, um Material, wie z.B. Werkzeugkisten, sicher zu verstauen.

In einer üblichen Ausführungsform einer Baumaschine ist das Dach flächig ausgebildet und der Zugangsschutz in der Verwahrposition im Wesentlichen parallel zu dem Dach angeordnet. Eine flache Dachkonstruktion, welche in ihrer Gesamtheit leicht geneigt sein kann, bietet einen zweckmäßigen Wetterschutz. Da der Zugangsschutz ebenfalls im Wesentlichen flächig ausgebildet ist, d.h. seine Ausdehnungen in zwei Koordinatenachsen deutlich größer sind als seine Ausdehnung in der Dritten, ist es besonders platzsparend, die Verwahrposition an einer Fläche des Daches vorzusehen. So lässt sich der Zugangsschutz zum Beispiel an der Unterseite des Daches und parallel zu diesem positionieren. Dort ist er gut verstaubar und vor Witterungseinflüssen geschützt. Genauso wäre es jedoch auch denkbar, den Zugangsschutz auf der Oberseite des Daches zu verwahren. Dies wäre besonders für den Fall günstig, falls sich an der Unterseite des Daches zusätzliche Schalter, Hebel oder ähnliche Vorrichtungen zum Bedienen der Baumaschine befinden.

Erfindungsgemäß ist das Dach der Baumaschine flächig ausgebildet und der Zugangsschutz in der Funktionsposition im Wesentlichen senkrecht zum Dach angeordnet. So kann nach Betriebsende das Dach auf den Bedienstand abgesenkt und der Zugangsschutz so angeordnet werden, dass der Zugang zum Bedienstand versperrt wird, also die Freilassung in einer den Bedienstand umfassenden Begrenzung in Form eines Geländers oder Gitters verschlossen ist. Je nach Neigung des Daches, welche auch in der unteren Transportposition sinnvoll sein kann, um z.B. einen Regenwasserablauf zu ermöglichen, oder weil das Dach auf unterschiedliche Höhen von Bedienpult und Sitzen abgesenkt wird, kann der Winkel zwischen Dach und Zugangsschutz auch leicht (d. h. bis etwa 10° oder 15°) von 90° abweichen. So kann der Zugangsschutz dennoch parallel zur hinteren Wand bzw. dem hinteren Geländer des Bedienstands sein und damit ein sicheres Verschließen des Bedienstands gewährleisten.

In einer zweckmäßigen Ausführungsform ist entsprechend der vorangegangenen Erläuterungen der Zugangsschutz in der Verwahrposition im Wesentlichen horizontal angeordnet. Dies entspricht zumeist im Wesentlichen der Ausrichtung des Daches des Bedienstands und erlaubt somit eine platzsparende Aufbewahrung des Zugangsschutzes.

Alternativ ist der Zugangsschutz erfindungsgemäß in der Funktionsposition im Wesentlichen vertikal angeordnet. Dies ist, wie bereits erläutert, zumeist die Anordnung, welche einen bündigen Abschluss mit der Rückwand der Baumaschine unterhalb des Bedienstands sowie mit der am Bedienstand verbauten Begrenzung in Form eines Gitters, Geländers oder ähnlichem ermöglicht.

Typischerweise ist der Zugangsschutz in der Verwahrposition vom Dach lösbar verwahrt. So kann der Zugangsschutz beispielsweise unterhalb des Daches angeordnet und mittels dreh- oder schiebbarer Riegel fixiert werden. Als zusätzliche Halterung können Vorsprünge oder Nute dienen. Ebenso ist es möglich, den Zugangsschutz in einem Einschub zu verwahren, welcher auch an der offenen Seite verriegelbar sein kann. Diese Varianten sind dazu geeignet, den Zugangsschutz einfach und zügig zu verstauen, und halten diesen zuverlässig, auch bei auftretenden Vibrationen oder Erschütterungen während des Betriebs der Baumaschine. Außerdem kann der Zugangsschutz so ohne zusätzliches Werkzeug oder lose Befestigungsteile, wie zum Beispiel Schraubendreher und Schrauben, angeordnet werden.

In einer besonders vorteilhaften Variante ist der Zugangsschutz um ein Scharnier angelenkt, um von der Verwahrposition in die Funktionsposition geschwenkt zu werden und umgekehrt. Zweckmäßig befindet sich das Scharnier an der hinteren Kante des Zugangsschutzes. Ein oder mehrere dreh- oder schiebbare Riegel können dabei seitlich oder vor dem Zugangsschutz am Dach angebracht sein, und den Zugangsschutz, wie bereits erwähnt, in nach oben geklappter Verwahrposition halten. Alternativ können die Riegel auch am Zugangsschutz angebracht sein und mit Ösen oder Nuten am Dach zur Verriegelung in Eingriff kommen. Das Scharnier macht den Wechsel zwischen Verwahrposition und Funktionsposition des Zugangsschutzes besonders einfach, so dass dieser vor dem Absenken des Daches einfach in die senkrechte Position geklappt werden kann. Das Scharnier kann dabei so gefertigt sein, dass es die Bewegung des Zugangsschutzes begrenzt. So kann zum Beispiel ein weiteres Schwenken nach hinten über eine 90°-Position in Relation zum Dach hinaus durch einen Anschlag begrenzt sein. Somit ist der Zugang zum Bedienstand in der Funktionsposition bereits dadurch gegen ein ungewolltes Öffnen, also ein weiteres nach hinten Klappen, geschützt. Durch ein Überlappen des Zugangsschutzes mit dem hinteren Karosserieteil der Baumaschine nach Absenken des Daches wird auch ein erneutes nach vorne schwenken verhindert.

Vorzugsweise ist der Zugangsschutz derart an dem Dach und/oder der Ständerstruktur verstrebt ist, um automatisch mit jeweils einer Auf- oder Abbewegung des Daches eine Positionsänderung zu vollziehen. Dies kann durch ein Gestänge oder einen anderen mechanisch ausreichend stabilen Mechanismus erfolgen. Die mechanische Übersetzung kann dabei so ausgebildet sein, dass der Zugangsschutz bereits vor dem Erreichen der Transportposition des Daches nach unten geklappt ist, um mit der folgenden restlichen Bewegung des Daches mit der hinteren Karosseriewand der Baumaschine zu überlappen. Wenn das Dach nicht bewegt wird, kann das Gestänge den Zugangsschutz in seiner oberen Verwahrposition halten, so dass keine weiteren Riegel dazu nötig sind. Somit kann der Zugangsschutz automatisch mit der Auf- und Abbewegung des Daches nach oben und unten schwenken, ohne dass ein weiterer händischer Eingriff durch den Bediener der Baumaschine nötig ist. Dies stellt eine besondere Zeitersparnis dar. Gleichzeitig bietet die automatische Arretierung in der Verwahrposition ein zusätzliches Maß an Sicherheit für die Personen auf der Baumaschine, da es nicht durch ein unsachgemäßes Betätigen eines Riegels zu einem ungewollten Herunterklappen des Zugangsschutzes kommen kann.

In einer weiteren Variante weist die Baumaschine einen hydraulischen oder elektrischen Antrieb zum Bewegen des Daches und/oder des Zugangsschutzes auf. Der hydraulische oder elektrische Antrieb kann entweder nur das Dach antreiben und diese Bewegung wird, wie im vorigen Absatz beschrieben, mit einer Verstrebung bzw. einem Gestänge auf den Zugangsschutz übertragen, oder sowohl Dach als auch Zugangsschutz verfügen jeweils über einen separaten Antrieb. In letzterem Fall können beide Komponenten unabhängig voneinander gesteuert werden. Der elektrische Antrieb kann durch jeweils einen oder mehrere Elektromotoren realisiert werden und der hydraulische Antrieb z. B. mittels Hydraulikzylinder. Eine Hydraulikpumpe kann wiederum durch den Primärantrieb der Baumaschine, üblicherweise ein Dieselmotor, oder mittels Elektromotoren betrieben werden. Beide Varianten bieten den Vorteil der Verstellung von Dach und Zugangsschutz ohne manuellen Kraftaufwand. Je nach Art und Gewicht des Daches und des Zugangsschutzes kann entweder ein hydraulisches System, welches besonders hohe Verstellkräfte ermöglicht, oder ein Elektroantrieb, welcher besonders einfach und günstig zu installieren ist, bevorzugt werden.

Idealerweise ist ein Bedienelement außerhalb des Bedienstands an der Baumaschine angeordnet, welches dazu geeignet ist, den Antrieb zum Bewegen des Daches und/oder des Zugangsschutzes zu steuern. Das Bedienelement ist, typischerweise in Form eines elektronischen Panels oder Pultes, mit der elektronischen Steuerung der Baumaschine verbunden und dazu geeignet, die hydraulischen und/oder elektrischen Komponenten zum Bewegen von Dach und Zugangsschutz zu steuern. Das Bedienelement kann dabei an jeder vorteilhaften, das heißt zugänglichen und während des Betriebs vor Schmutz und mechanischer Beeinträchtigung geschützten Stelle der Baumaschine platziert werden, so zum Beispiel an einer seitlichen Position, an einer hinteren Position wie zum Beispiel am Aufgang zum Bedienstand oder im Falle eines Straßenfertigers auch an der Einbaubohle. Die Strom- und Steuerleitungen, welche das Bedienelement mit den anderen Komponenten der elektronischen Steuerung verbinden, sind dabei möglichst innerhalb von Metallröhren und Gestängen oder hinter Verkleidungsteilen geführt, um sie vor äußeren Einflüssen und Manipulation zu schützen. Das Bedienelement kann zudem dazu konfiguriert und verschaltet sein, mittels Power-Line-Communication (PLC) die einzelnen Komponenten anzusteuern. Mit Hilfe eines solchen Bedienelements kann das Dach und der Zugangsschutz verstellt werden, da die untere Transportposition keinen Aufenthalt eines Bedieners auf dem Bedienstand erlaubt. Zudem kann das Bedienelement dafür konfiguriert sein, weitere Funktionen der Baumaschine zu steuern. So kann ggf. auch der Dieselmotor der Baumaschine mittels des Bedienelements angelassen werden, um zum Beispiel eine Hydraulikpumpe anzutreiben. Das Bedienelement kann so konfiguriert sein, dass benötigte Funktionen abseits des Bedienstandes betätigt werden können. Das Bedienelement kann auch als von der Baumaschine lösbare Fernsteuerung ausgebildet sein. Zusammen mit einer Sender- und Empfängereinheit an der Baumaschine können so die Bedienung besonders komfortabel und auch in Abstand zur Baumaschine erfolgen. Dies kann sinnvoll sein, um einen gleichzeitig einen besseren Überblick über die Baumaschine und die Umgebungsbedingungen zu erhalten.

In einer weiteren möglichen Variante weist die Baumaschine einen manuell zu betätigenden Mechanismus zum Bewegen des Daches und/oder des Zugangsschutzes auf. So ist zum Beispiel ein Kurbelmechanismus denkbar, welcher mit einer entsprechenden mechanischen Übersetzung auch das Verstellen von Dächern mit höherem Gewicht erlaubt. Ein solcher manuell zu betätigender Mechanismus ist eine besonders einfache und damit kostengünstige Realisierung eines Antriebs zum Verstellen von Dach und Zugangsschutz und kann als Ersatz bei einem Ausfall des elektrischen und hydraulischen Antriebs dienen.

In einer vorteilhaften Variante ist der Zugangsschutz als geschlossene Fläche oder als Gitterstruktur ausgebildet. Als Material kann zum Beispiel Metall, Stahl, Kunststoff oder Verbundstoff gewählt werden. Länge und Breite des Zugangsschutzes richten sich zweckmäßig nach den Abmessungen des zu verschließenden Zugangs und die Dicke wird so gewählt, um in Abhängigkeit des gewählten Materials ausreichend Festigkeit zu bieten. Die Festigkeit sollte dabei genügend groß sein, um ein manuelles Aufbiegen zu verhindern. Auch ein Aufbiegen unter Zuhilfenahme von Werkzeug, wie zum Beispiel eines Stemmeisens, sollte nicht möglich sein. Wie allgemein bekannt ist, können gitterstrukturartige Bauteile höchst stabil sein, und gleichzeitig zu einer Materialeinsparung führen. So kann eine solche Struktur auch für einen Zugangsschutz gewählt werden. Somit ist ein zuverlässiger Schutz des Bedienstands sichergestellt.

Vorzugsweise ist ein Sperrmechanismus an der Baumaschine angeordnet, welcher dazu geeignet ist, eine Betätigung des Antriebs zum Bewegen des Daches und/oder des Zugangsschutzes zu sperren. Der Sperrmechanismus kann zum Beispiel in Form eines herkömmlichen Zündschlosses oder als elektronisches Zahlenschloss, also als ein elektronischer Sperrmechanismus, der mit der Bordelektronik verbunden ist und über ein Tastenfeld bedient wird, ausgefertigt sein. Der Sperrmechanismus kann in der Nähe des oben beschriebenen Bedienelements angeordnet oder an diesem oder als ein Teil davon ausgebildet sein. Der Sperrmechanismus kann zudem dafür geeignet sein, die Baumaschine als solche ein- und auszuschalten bzw. deren Funktionen, wie zum Beispiel das Anlassen des Motors, freizugeben und zu sperren. Auf dem Bedienstand selbst kann ein weiterer Sperrmechanismus mit denselben Funktionen vorhanden sein. Wie allgemein von vergleichbaren Sperrmechanismen im Kraftfahrzeugbereich, wie zum Beispiel Zündschlössern, bekannt, wird dadurch die Inbetriebnahme und Bedienung der Baumaschine nur durch befugte Personen erlaubt.

Idealerweise ist ein Verriegelungsmechanismus am Zugangsschutz angeordnet. So kann zum Beispiel ein Scharnierelement oder ein Riegel am Zugangsschutz auf bekannte Weise mit einer Öse an einem Karosserieteil in Eingriff kommen und mittels eines Vorhängeschlosses gesichert werden. Natürlich ist auch die umgekehrte Anordnung möglich. Auch eine Sicherung mit einer Schraube, welche nur mit einem passend geformten Spezialwerkzeug, vergleichbar einem Felgenschloss, zu öffnen ist, wäre denkbar. Ebenso ist ein Verriegelungsmechanismus vergleichbar eines Türschlosses möglich. Ein derartiger Verriegelungsmechanismus kann zusätzlich oder alternativ zu obigem Sperrmechanismus verwendet werden. Somit ist die Sicherung des Bedienstandes durch den Zugangsschutz auf mechanisch besonders stabile Art gewährleistet.

In einer weiteren Ausführungsform ist der Zugangsschutz in der Art eines Rollosystems ausgebildet. So kann der Zugangsschutz aus Segmenten gebildet sein und kann von seiner Verwahrposition am Dach der Baumaschine nach unten in die Funktionsposition ähnlich einem Rollo ausgezogen werden. Am Dach kann ein Rollokasten angebracht sein, in welchem der Zugangsschutz aufgerollt wird. Das Rollo kann als Metallgitter oder als Verbund flächiger Querteile gebildet sein. Alternativ zu einem Rollokasten kann auch eine lineare Führung an der Unterseite des Dachs vorhanden sein, welche den Zugangsschutz aufnimmt. Bei diesem sogenannten Sektionalsystem sind die einzelnen Abschnitte des Zugangsschutzes zumeist größer als bei einem Rollosystem mit Kasten. In der unteren Funktionsposition kann ein rolloartiger Zugangsschutz über seine ganze Breite an der Karosserie der Baumaschine befestigt werden, um eine stabile Verriegelung zu erhalten. Dabei ist die Länge und der Aufbau des Zugangsschutzes in Form eines Rollos so gewählt, dass dieses sich nicht nach hinten oder vorne wegdrücken lässt. Zusätzlich können auch noch seitliche vertikale Führungsschienen vorhanden sein, welche in der unteren Transportposition des Daches mit diesem und der Karosserie in Eingriff kommen und so das Rollo seitlich stabilisieren. Besonderer Vorteil eines Rollosystems ist die einfache Bedienbarkeit. Die Weiterbildung als Sektionialsystem kann zudem noch eine erhöhte mechanische Stabilität bedeuten und macht einen unter Umständen störenden Rollokasten überflüssig.

In einer weiteren Ausführungsform ist der Zugangsschutz als Schwingsystem ausgebildet. Ein Führungsmechanismus bzw. eine Führungsschiene, welche am Dach ausgebildet ist, erlaubt den Zugangsschutz derart von der Verwahrposition in die Funktionsposition zu bewegen, dass das in der Verwahrposition nach hinten weisende Ende des Zugangsschutzes in der Funktionsposition das untere Ende darstellt. Zusätzlich zu der Führungsschiene kann ein Gestänge zum Abfedern der Bewegung vorhanden sein, was jedoch nicht zwingend ist. Diese Variante kombiniert die mechanische Stabilität und damit Sicherheit der oben beschriebenen Variante eines um ein Scharnier schwenkbaren Zugangsschutzes mit dem Vorteil, dass der Zugangsschutz nicht durch den Bedienstand hindurch bewegt wird. Dies kann bei bestimmten baulichen Gegebenheiten hilfreich sein.

Im Folgenden werden Ausführungsbeispiele der Erfindung anhand der Figuren näher beschrieben. Dabei zeigen
Figur 1: eine perspektivische Rückansicht einer Baumaschine in Form eines Straßenfertigers mit einem Dach in einer oberen Betriebsposition und einem Zugangsschutz, welcher in einer Verwahrposition angeordnet ist.
Figur 2: eine Seitenansicht der Baumaschine in Form eines Straßenfertigers mit einem Dach in einer oberen Betriebsposition und einem Zugangsschutz, welcher in einer Verwahrposition angeordnet ist.
Figur 3: eine perspektivische Rückansicht der Baumaschine in Form eines Straßenfertigers mit einem Dach in einer unteren Transportposition und einem Zugangsschutz, welcher in einer Funktionsposition angeordnet ist.
Figur 4: eine Seitenansicht der Baumaschine in Form eines Straßenfertigers mit einem Dach in einer unteren Transportposition und einem Zugangsschutz, welcher in einer Funktionsposition angeordnet ist.
Figur 5: eine Seitenansicht einer alternativen Ausführungsform eines Zugangsschutzes in Form eines Rollosystems.
Figur 6: eine Seitenansicht einer alternativen Ausführungsform eines Zugangsschutzes in Form eines Sektionalsystems.
Figur 7: eine Seitenansicht einer alternativen Ausführungsform eines Zugangsschutzes in Form eines Schwingsystems.

Einander entsprechende Komponenten sind in den Figuren jeweils mit gleichen Bezugszeichen versehen.

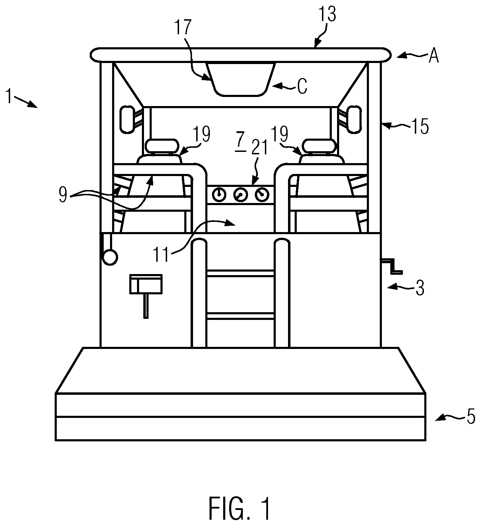

Figur 1 zeigt ein Ausführungsbeispiel einer erfindungsgemäßen Baumaschine 1 hier beispielhaft in Form eines Straßenfertigers in perspektivischer Rückansicht. Der Straßenfertiger umfasst eine Zugmaschine 3 sowie eine Einbaubohle 5, welche optional in ihrer Größe variabel und/oder austauschbar ist. Auf der Zugmaschine 3 befindet sich ein Bedienstand 7, auf welchem sich ein Fahrer während des Betriebs der Baumaschine 1 aufhält. Der Bedienstand 7 ist von seitlichen Begrenzungen 9, hier in Form von geländerartigen Streben, umschlossen, welche an der Rückseite der Baumaschine 1 einen Zugang 11 zum Betreten des Bedienstandes 7 frei lassen.

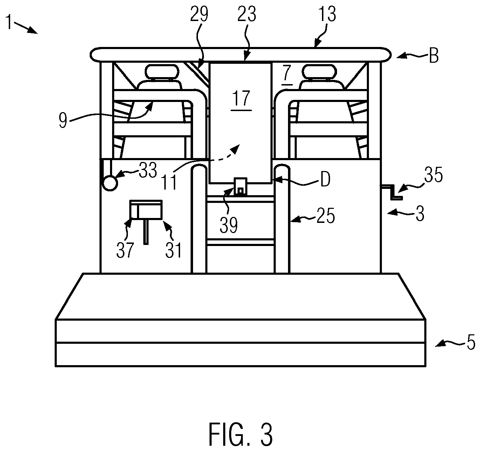

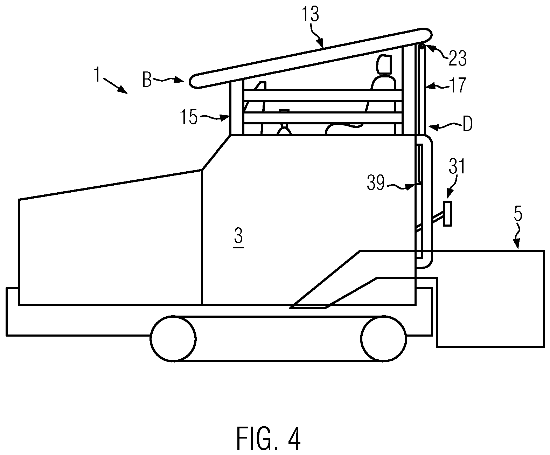

Der Bedienstand 7 wird von einem Dach 13 überspannt, welches von einer höhenverstellbaren Ständerstruktur 15 getragen wird. Die Ständerstruktur 15 kann beispielsweise einen Teleskopmechanismus umfassen, welcher nach oben ausgeschoben werden kann, um das Dach 13 in eine obere Betriebsposition A zu bringen, oder zusammengeschoben werden kann, um das Dach 13 in eine untere Transportposition B (siehe Fig. 3, 4)auf den Bedienstand 7 abzusenken. Das Dach 13 kann je nach baulichen Vorgaben und gewünschten Eigenschaften in oberer und unterer Position A, B jeweils exakt horizontal verlaufen oder auch geneigt sein. An dem Dach 13, hier beispielhaft an dessen Unterseite und parallel zu dem Dach 13, ist ein Zugangsschutz 17 in einer im Wesentlichen horizontalen, parallel zum Dach 13 ausgerichteten Verwahrposition C angeordnet. Auf dem Bedienstand 7 können weitere Elemente wie ein oder mehrere Sitze 19, ein Bedienpult 21 o.ä. angeordnet sein.

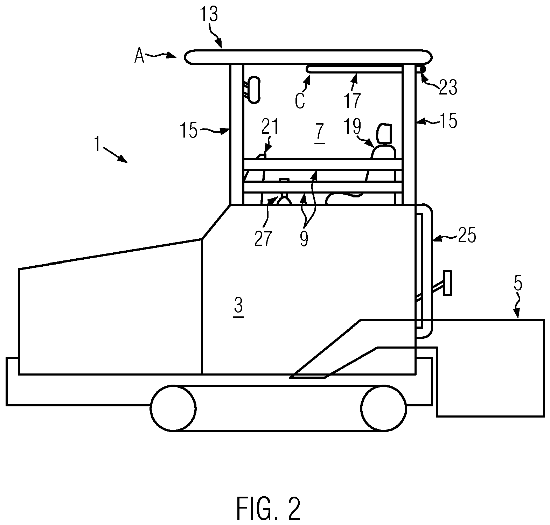

Figur 2 zeigt eine Seitenansicht eines Ausführungsbeispiels einer erfindungsgemäßen Baumaschine 1 in Form eines Straßenfertigers mit einem Dach 13 in einer oberen Betriebsposition A und einem Zugangsschutz 17, welcher in einer Verwahrposition C angeordnet ist. Am hinteren Ende ist der Zugangsschutz 17 mit einem Scharnier 23 an das Dach 13 angelenkt, um von der Verwahrposition C in die Funktionsposition D (siehe Fig. 3, 4) geschwenkt zu werden und umgekehrt. Die seitlichen Begrenzungen 9 sind zweckmäßig so angeordnet, dass sie den Fahrer in seiner Sicht nicht einschränken, jedoch bei abgesenktem Dach 13 einen Zutritt zum Bedienstand 7 verhindern. Außerdem sind die Begrenzungen 9 in einer sinnvollen Höhe, um ein Herabstürzen des Fahrers vom Bedienstand 7 zu verhindern. Ein zusätzliches Geländer 25 kann am Aufstieg zum Bedienstand 7 angebracht sein. Auf dem Bedienstand 7 sind beispielhaft ein Sitz 19, das Bedienpult 21 und ein Steuerhebel 27 gezeigt.

Figur 3 zeigt eine perspektivische Rückansicht der Baumaschine 1 in Form eines Straßenfertigers mit dem Dach 13 in einer unteren Transportposition B und einem Zugangsschutz 17, welcher in einer Funktionsposition D angeordnet ist. Wie zu erkennen ist, ist das Dach 13 soweit auf den Bedienstand 7 abgesenkt, dass in Verbindung mit der Begrenzung 9 für eine Person kein Eindringen in den Bedienstand 7 möglich ist. Die bisher einzige größere verbleibende Lücke am Zugang 11 ist nun mit dem nach unten in die im Wesentlichen vertikale Funktionsposition D geschwenkten Zugangsschutz 17 verschlossen. Eine Verstrebung 29 ist dazu geeignet, die Auf- und Abbewegung des Daches 13 automatisch auf den Zugangsschutz 17 zu übertragen.

Ein Bedienelement 31 dient zur Steuerung der Baumaschine 1 von einer Position des Bedieners außerhalb des Bedienstands 7, insbesondere zur Betätigung eines Antriebs 33 zum Bewegen des Daches 13 sowie des Zugangsschutzes 17. Der Antrieb 33 kann, wie oben beschrieben hydraulisch oder elektrisch sein und auch mehrere Antriebskomponenten, wie zum Beispiel Elektromotoren, umfassen, die an unterschiedlichen Positionen, wie zum Beispiel an den vier Seitenständern der Ständerstruktur 15 und dem Zugangsschutz 17, angeordnet sind. Ist nur ein Antrieb 33 vorhanden, kann die Kraft, zum Beispiel mittels der Verstrebung 29, weiter übertragen werden. Entgegen der vorliegenden Darstellung kann der Antrieb 33 auch unter einem Karosserieteil verdeckt angeordnet sein. Zusätzlich oder alternativ zu dem hydraulischen oder elektrischen Antrieb kann ein manuell zu betätigender Mechanismus 35 vorhanden sein. Dieser kann zum Beispiel ein Kurbelmechanismus sein und bei einem technischen Problem des maschinellen Antriebs 33 zum Einsatz kommen. Ein Sperrmechanismus 37, wie zum Beispiel ein Zahlenschloss oder ein Zündschloss, dient dem Verhindern einer unbefugten Betätigung des Antriebs 33 und kann zweckmäßigerweise an dem Bedienelement 31 ausgebildet sein. Ein Verriegelungsmechanismus 39 kann am Zugangsschutz 17 angebracht sein und zum Beispiel eine scharnierartig angelenkte Lasche, eine Öse und ein Vorhängeschloss umfassen.

Figur 4 zeigt eine Seitenansicht der Baumaschine 1 in Form eines Straßenfertigers mit dem Dach 13 in einer unteren Transportposition B und einem Zugangsschutz 17, welcher in einer Funktionsposition D angeordnet ist. Das Dach 13 ist mit einer Neigung dargestellt, kann aber auch in exakt horizontaler Ausrichtung die untere Transportposition B einnehmen. Zu erkennen ist, wie der Zugangsschutz 17 an seinem unteren Ende mit der Karosserie der Baumaschine 1 ohne größeren Abstand überlappt. Ein Verriegelungsmechanismus 39 kann den Zugangsschutz 17 und die Karosserie miteinander verbinden.

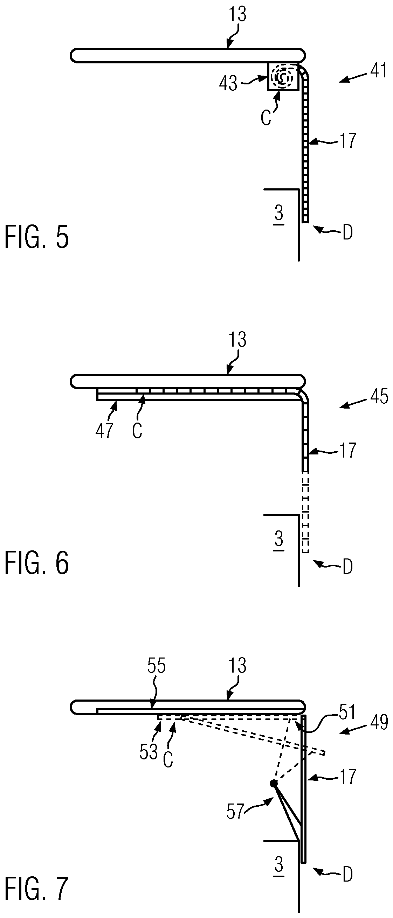

Figur 5 zeigt eine Seitenansicht einer alternativen Ausführungsform eines Zugangsschutzes 17 in Form eines Rollosystems 41. An dem Dach 13 ist ein Rollokasten 43 angebracht, welcher den Zugangsschutz 17 in der Verwahrposition C komplett aufnimmt. Vollständig ausgezogen befindet sich der Zugangsschutz 17 in Form eines Rollos in der Funktionsposition D und ist zweckmäßig mit der Karosserie der Baumaschine 1 verbunden.

Figur 6 zeigt eine Seitenansicht einer alternativen Ausführungsform eines Zugangsschutzes 17 in Form eines Sektionalsystems 45 als Weiterbildung eines Rollosystems 41. In der oberen Verwahrposition C wird der Zugangsschutz 17 mittels linearer Schienen 47 an der Unterseite des Dachs 13 positioniert.

Figur 7 zeigt eine Seitenansicht einer alternativen Ausführungsform eines Zugangsschutzes 17 in Form eines Schwingsystems 49. In der Verwahrposition C befindet sich der starre Zugangsschutz 17 parallel zum Dach 13. Aus dieser Position wird das hintere Ende 51 des Zugangsschutzes 17 nach unten geführt, wobei das vordere Ende 53 durch eine Führung 55 im Dach 13, in welcher der Zugangsschutz 17 verankert ist, nach hinten nachgeführt wird. Zusätzlich kann ein Gestänge 57 die Bewegung stabilisieren. Ebenso wäre es möglich, erst den Zugangsschutz 17 parallel zum Dach 13 vollständig nach hinten zu führen, wobei er z.B. durch Rollen an seinem vorderen Ende 53 in der Führung 55 gelagert ist, und sodann um 90° nach unten in die Funktionsposition D zu schwenken.

Ausgehend von den oben dargestellten Ausführungsformen einer Baumaschine 1 mit einem Zugangsschutz 17 für einen Bedienstand 7 sind vielerlei Variationen derselben möglich. So sind auch andere Aufbewahrungspositionen für den Zugangsschutz 17 an der Baumaschine 1 mittels einer Halterung denkbar, wie zum Beispiel seitlich (rechts oder links), hinten an einer Karosseriefläche oder am Geländer hinter den Sitzen. Dabei sollte darauf geachtet werden, dass der Betrieb der Baumaschine 1 oder die Sicht des Fahrers nicht beeinträchtigt wird. Der Zugangsschutz 17 selbst könnte zwei- oder mehrteilig mit die Teile stabil verbindenden Scharnieren ausgebildet sein, so dass der Zugangsschutz 17 faltbar ist, bevor er in eine Verwahrposition C gebracht wird.

## Patentansprüche

1. Baumaschine (1) mit einem Bedienstand (7), welcher seitliche Begrenzungen (9), einen Zugang (11) zum Betreten des Bedienstands (7), ein Dach (13) und eine das Dach (13) tragende und höhenverstellbare Ständerstruktur (15) aufweist, wobei das Dach (13) den Bedienstand (7) überspannt und von mindestens einer oberen Betriebsposition (A) auf mindestens eine untere Transportposition (B) und umgekehrt verstellbar ist,
**dadurch gekennzeichnet, dass**
an dem Dach (13) und/oder der Ständerstruktur (15) ein Zugangsschutz (17) angebracht ist, welcher als flächiges Element ausgebildet und dazu konfiguriert ist, eine zum Dach (13) benachbarte Verwahrposition (C) und eine vom Dach (13) weiter beabstandete Funktionsposition (D), in welcher der Zugang (11) zum Bedienstand (7) durch den Zugangsschutz (17) versperrt wird, reversibel einzunehmen, und die Funktionsposition (D) von dem Zugangsschutz (17) einnehmbar ist, wenn sich das Dach (13) in der unteren Transportposition (B) befindet, wobei das Dach (13) flächig ausgebildet ist und der Zugangsschutz (17) in der Funktionsposition (D) entweder mit dem Dach (13) einen Winkel von ca. 75° bis 105° einschließt oder im Wesentlichen vertikal angeordnet ist.

2. Baumaschine nach Anspruch 1, **dadurch gekennzeichnet, dass** die Baumaschine (1) ein Straßenfertiger oder ein Beschickerfahrzeug ist.

3. Baumaschine nach einem der vorangegangenen Ansprüche, **dadurch gekennzeichnet, dass** der Zugangsschutz (17) in der Verwahrposition (C) im Wesentlichen parallel zum Dach (13) angeordnet ist.

4. Baumaschine nach einem der vorangegangenen Ansprüche, **dadurch gekennzeichnet, dass** der Zugangsschutz (17) in der Verwahrposition (C) im Wesentlichen horizontal angeordnet ist.

5. Baumaschine nach einem der vorangegangenen Ansprüche, **dadurch gekennzeichnet, dass** der Zugangsschutz (17) in der Verwahrposition (C) vom Dach (13) lösbar verwahrt ist.

6. Baumaschine nach einem der Ansprüche 1 bis 4, **dadurch gekennzeichnet, dass** der Zugangsschutz (17) um ein Scharnier (23) angelenkt ist, um von der Verwahrposition (C) in die Funktionsposition (D) geschwenkt zu werden und umgekehrt.

7. Baumaschine nach Anspruch 6, **dadurch gekennzeichnet, dass** der Zugangsschutz (17) derart an dem Dach (13) und/oder der Ständerstruktur (15) verstrebt ist, um automatisch mit jeweils einer Auf- oder Abbewegung des Daches (13) eine Positionsänderung zu vollziehen.

8. Baumaschine nach einem der vorangegangenen Ansprüche, **dadurch gekennzeichnet,** einen hydraulischen oder elektrischen Antrieb (33) zum Bewegen des Daches (13) und/oder des Zugangsschutzes (17) aufzuweisen.

9. Baumaschine nach einem der vorangegangenen Ansprüche, **dadurch gekennzeichnet, dass** ein Bedienelement (31) außerhalb des Bedienstands (7) an der Baumaschine (1) angeordnet ist, welches dazu geeignet ist, den Antrieb (33) zum Bewegen des Daches (13) und/oder des Zugangsschutzes (17) zu steuern, wobei das Bedienelement (31) insbesondere als von der Baumaschine (1) lösbare Fernsteuerung ausgebildet ist.

10. Baumaschine nach einem der Ansprüche 1 bis 7, **dadurch gekennzeichnet,** einen manuell zu betätigenden Mechanismus (35) zum Bewegen des Daches (13) und/oder des Zugangsschutzes (17) aufzuweisen.

11. Baumaschine nach einem der vorangegangenen Ansprüche, **dadurch gekennzeichnet, dass** der Zugangsschutz (17) als geschlossene Fläche oder als Gitterstruktur, vorzugsweise aus Metall, Stahl, Kunststoff oder Verbundstoff ausgebildet ist.

12. Baumaschine nach einem der vorangegangenen Ansprüche, **dadurch gekennzeichnet, dass** ein Sperrmechanismus (37) an der Baumaschine (1) angeordnet ist, welcher dazu geeignet ist, eine Betätigung des Antriebs (33) zum Bewegen des Daches (13) und/oder des Zugangsschutzes (17) zu sperren.

13. Baumaschine nach einem der vorangegangenen Ansprüche, **dadurch gekennzeichnet, dass** ein Verriegelungsmechanismus (39) am Zugangsschutz (17) angeordnet ist.

14. Baumaschine nach einem der vorangegangenen Ansprüche, **dadurch gekennzeichnet, dass** der Zugangsschutz (17) als Rollosystem (41) ausgebildet ist.

15. Baumaschine nach einem der Ansprüche 1 bis 13, **dadurch gekennzeichnet, dass** der Zugangsschutz (17) als Schwingsystem (49) ausgebildet ist.

## Claims

1. Construction machine (1) with an operating platform (7) that has lateral delimitations (9), an access (11) for entering the operating platform (7), a roof (13) and a height-adjustable rack structure (15) that carries the roof (13), wherein the roof (13) extends over the operating platform (7) and is adjustable from at least one upper operating position (A) to at least one lower transport position (B) and vice versa,
**characterized in that**
an access control (17) is installed on the roof (13) and/or the rack structure (15), which is formed as a planar element and configured to reversibly take on a storage position (C), which is adjacent to the roof (13), and a functional position (D) that is spaced farther away from the roof (13) and in which the access (11) to the operating platform (7) is blocked by the access control (17), and the functional position (D) can be taken on by the access control (17), when the roof (13) is in the lower transport position (B), wherein the roof (13) is formed planar and the access control (17) in the functional position (D) either encloses an angle of ca. 75° to 105° with the roof (13) or is essentially arranged in a vertical way.

2. Construction machine according to Claim 1, **characterized in that** the construction machine (1) is a road paver or a feeder vehicle.

3. Construction machine according to one of the preceding claims, **characterized in that** the access control (17) in the storage position (C) is arranged essentially in parallel to the roof (13).

4. Construction machine according to one of the preceding claims, **characterized in that** the access control (17) in the storage position (C) is essentially arranged in a horizontal way.

5. Construction machine according to one of the preceding claims, **characterized in that** the access control (17) in the storage position (C) is stored in a way as to be removable from the roof (13).

6. Construction machine according to one of the Claims 1 to 4, **characterized in that** the access control (17) is articulated around a hinge (23) in order to be swiveled from the storage position (C) into the functional position (D) and vice versa .

7. Construction machine according to Claim 6, **characterized in that** the access control (17) is braced on the roof (13) and/or the rack structure (15) in such a way that it can automatically perform a position change with respectively one upward or downward movement of the roof (13).

8. Construction machine according to one of the preceding claims, **characterized in** having a hydraulic or electric drive (33) for moving the roof (13) and/or the access control (17).

9. Construction machine according to one of the preceding claims, **characterized in that** an operating element (31), which is suitable to control the drive (33) for moving the roof (13) and/or the access control (17), is arranged outside of the operating platform (7) on the construction machine (1), wherein the operating element (31) is formed in particular as a remote control that can be detached from the construction machine (1).

10. Construction machine according to one of the Claims 1 to 7, **characterized in** having a mechanism (35) to be actuated manually for moving the roof (13) and or the access control (17).

11. Construction machine according to one of the preceding claims, **characterized in that** the access control (17) is formed as a closed surface or a lattice structure, preferably of metal, steel, plastic or composite material.

12. Construction machine according to one of the preceding claims, **characterized in that** a locking mechanism (37) is disposed on the construction machine (1), which is suitable to lock an actuation of the drive (33) for moving the roof (13) and/or the access control (17).

13. Construction machine according to one of the preceding claims, **characterized in that** a locking device (39) is disposed on the access control (17).

14. Construction machine according to one of the preceding claims, **characterized in that** the access control (17) is formed as a roller blind system (41).

15. Construction machine according to one of the Claims 1 to 13, **characterized in that** the access control (17) is formed as a swing system (49).

## Revendications

1. Engin de travaux publics (1) comprenant un poste de commande de service (7), qui comporte des délimitations latérales (9), un accès (11) pour pénétrer dans le poste de commande de service (7), un toit (13) et une structure de montants (15) réglable en hauteur supportant le toit (13), le toit (13) couvrant le poste de commande de service (7) et pouvant être déplacé d'au moins une position de fonctionnement supérieure (A) vers au moins une position de transport inférieure (B), ou inversement,
**caractérisé**
**en ce que** sur le toit (13) et/ou sur la structure de montants (15), est placée une protection d'accès (17), qui est réalisée sous la forme d'un élément plan de surface et est configurée pour prendre de manière réversible une position de rangement (C) voisine du toit (13), et une position fonctionnelle (D) plus éloignée du toit (13), dans laquelle l'accès (11) au poste de commande de service (7) est obstruée par la protection d'accès (17), et la position fonctionnelle (D) peut être prise par la protection d'accès (17) lorsque le toit (13) se trouve dans la position de transport inférieure (B), le toit (13) étant d'une configuration sensiblement plane et surfacique, et la protection d'accès (17) formant, dans la position fonctionnelle (D), un angle d'environ 75° à 105° avec le toit (13), ou étant agencée sensiblement de manière verticale.

2. Engin de travaux publics selon la revendication 1, **caractérisé en ce que** l'engin de travaux publics (1) est un finisseur de route ou un véhicule alimentateur.

3. Engin de travaux publics selon l'une des revendications précédentes, **caractérisé en ce que** dans la position de rangement (C), la protection d'accès (17) est agencée sensiblement de manière parallèle au toit (13) .

4. Engin de travaux publics selon l'une des revendications précédentes, **caractérisé en ce que** dans la position de rangement (C), la protection d'accès (17) est agencée sensiblement de manière horizontale.

5. Engin de travaux publics selon l'une des revendications précédentes, **caractérisé en ce que** la protection d'accès (17) est, dans la position de rangement (C), rangée de manière amovible du toit (13).

6. Engin de travaux publics selon l'une des revendications 1 à 4, **caractérisé en ce que** la protection d'accès (17) est articulée autour d'une charnière (23) en vue d'assurer son pivotement de la position de rangement (C) à la position fonctionnelle (D) et inversement.

7. Engin de travaux publics selon la revendication 6, **caractérisé en ce que** la protection d'accès (17) est reliée par un système d'entretoisement au toit (13) et/ou à la structure de montants (15), pour effectuer automatiquement une modification de sa position avec un mouvement respectif de relevage ou d'abaissement du toit (13) .

8. Engin de travaux publics selon l'une des revendications précédentes, **caractérisé en ce qu'**il présente un entraînement électrique ou hydraulique (33) pour assurer le déplacement du toit (13) et/ou de la protection d'accès (17).

9. Engin de travaux publics selon l'une des revendications précédentes, **caractérisé en ce qu'**un élément de commande de manœuvre (31) est agencé à l'extérieur du poste de commande de service (7) sur l'engin de travaux publics (1), qui est adapté à assurer la commande de l'entraînement (33) pour le déplacement du toit (13) et/ou de la protection d'accès (17), l'élément de commande de manœuvre (31) étant notamment réalisé sous forme de commande à distance ou de télécommande pouvant être détachée de l'engin de travaux publics (1).

10. Engin de travaux publics selon l'une des revendications 1 à 7, **caractérisé en ce qu'**il comprend un mécanisme (35) à actionner manuellement pour assurer le déplacement du toit (13) et/ou de la protection d'accès (17).

11. Engin de travaux publics selon l'une des revendications précédentes, **caractérisé en ce que** la protection d'accès (17) est réalisée sous forme de surface fermée ou sous forme de structure en treillis, de préférence en métal, acier, matière plastique ou matériau composite.

12. Engin de travaux publics selon l'une des revendications précédentes, **caractérisé en ce que** sur l'engin de travaux publics (1) est agencé un mécanisme de blocage (37), qui est adapté à bloquer un actionnement de l'entrainement (33) destiné au déplacement du toit (13) et/ou de la protection d'accès (17) .

13. Engin de travaux publics selon l'une des revendications précédentes, **caractérisé en ce qu'**un mécanisme de verrouillage (39) est agencé sur la protection d'accès (17).

14. Engin de travaux publics selon l'une des revendications précédentes, **caractérisé en ce que** la protection d'accès (17) est réalisée sous la forme d'un volet roulant (41).

15. Engin de travaux publics selon l'une des revendications 1 à 13, **caractérisé en ce que** la protection d'accès (17) est réalisée sous la forme d'un système oscillo-pivotant (49).
